# EUROPEAN PATENT APPLICATION

(11) **EP 3 828 776 A1**
(43) Date of publication of application: **02.06.2021**
(21) Application number: 20202259.6
(22) Date of filing: 16.10.2020
(51) Int. Cl.: G06N 3/04, G06N 3/08, G06N 20/00

(54) **PROGRAM, LEARNING METHOD, AND LEARNING APPARATUS**

(30) Priority: 27.11.2019 JP 2019214496
(71) Applicant: FUJITSU LIMITED, Kanagawa 211-8588 (JP)
(72) Inventor: Kai, Yutaka, Kanagawa, 211-8588 (JP); Kasagi, Akihiko, Kanagawa, 211-8588 (JP)
(74) Representative: Hoffmann Eitle

(57) **Abstract**

A first learning rate is set to a first block including a first parameter, and a second learning rate, which is smaller than the first learning rate, is set to a second block including a second parameter. The first block and the second block are included in a model. Learning processing in which updating the first parameter based on a prediction error of the model, the prediction error having been calculated by using training data, and the first learning rate and updating the second parameter based on the prediction error and the second learning rate are performed iteratively is started. An update frequency of the second parameter is controlled such that this update frequency becomes lower than an update frequency of the first parameter by intermittently omitting the updating of the second parameter in the learning processing based on a relationship between the first and second learning rates.

## Description

### FIELD

The embodiments discussed herein are related to a program, a learning method, and a learning apparatus.

### BACKGROUND

There are cases in which machine learning is performed as means of computer-based data analysis. In machine learning, training data indicating known cases is inputted to a computer. The computer analyzes the training data and learns a model that generalizes a relationship between factors (which may be referred to as explanatory variables or independent variables) and results (which may be referred to as objective variables or dependent variables). By using this learned model, the computer predicts results of unknown cases. For example, the computer learns a character recognition model that recognizes handwritten characters.

There is a trend that these models learned by machine learning, e.g., multi-layer neural networks learned by deep learning, increase in scale to improve their prediction accuracy. If parameters of a large-scale model are optimized from scratch, since a large size of training data is needed, the learning time is extended. Thus, this kind of optimization is inefficient.

There is a method in which an existing model whose parameters have already been learned is used. Specifically, an extended model is generated by connecting an additional portion to an existing portion. For example, there is a method for generating a character recognition model focused on recognition of handwritten characters by using a generic image recognition model. In machine learning using an existing model, there are cases in which only minor changes need to be made to parameters of an existing portion from their existing values while parameters of an additional portion need to be optimized from scratch.

For example, there is proposed a machine learning apparatus that performs machine learning. This machine learning apparatus is configured by connecting a new neural network to a downstream portion of an existing neural network that has already been learned. This machine learning apparatus learns a new neural network by inputting training data to the existing neural network and inputting the operation result of the existing neural network to the new neural network. The machine learning apparatus outputs this new neural network as a result of the machine learning.

See, for example, Japanese Laid-open Patent Publication No. 2017-182320.

There are cases in which machine learning could repeat an operation of inputting a certain unit of training data to a model, calculating the prediction error of the output of the model, and updating parameters of the model such that the prediction error is reduced, by using different training data. In this operation, a "learning rate" used to adjust a single update amount of model parameters is given as a hyper parameter from the outside. The larger the learning rate is, the larger the single update amount of the parameters will be. The smaller the learning rate is, the smaller the single update amount of the parameters will be. The learning rate affects the convergence rate and the final accuracy of the machine learning.

When a model to be learned includes a plurality of blocks, a different learning rate may be set per block. For example, when a model includes an existing portion and a new portion, a small learning rate may be set to the existing portion, and a large learning rate may be set to the new portion. However, in conventional machine learning, parameter update processing is performed on a plurality of blocks in the same way. Thus, in a block having a small learning rate, the corresponding parameters change little before and after the parameter update processing. Therefore, the conventional machine learning has a problem in that unnecessary update processing is consequently performed. For example, there are cases in which, even when the update processing is performed on an existing portion of a model, the corresponding parameters do not change at all.

### SUMMARY

It is an object in one aspect of the embodiments to provide a program, a learning method, and a learning apparatus that reduce the calculation amount of machine learning.

According to an aspect, there is provided a computer program that causes a computer to execute a process including: setting a first learning rate to a first block including a first parameter and a second learning rate, which is smaller than the first learning rate, to a second block including a second parameter, the first block and the second block being included in a model; starting learning processing in which updating the first parameter based on a prediction error of the model and the first learning rate and updating the second parameter based on the prediction error and the second learning rate are performed iteratively, the prediction error having been calculated by using training data; and controlling an update frequency of the second parameter such that the update frequency of the second parameter becomes lower than an update frequency of the first parameter by intermittently omitting the updating of the second parameter in the learning processing based on a relationship between the first learning rate and the second learning rate.

### BRIEF DESCRIPTION OF DRAWINGS

FIG. 1 illustrates an example of a learning apparatus according to a first embodiment;
FIG. 2 is a block diagram illustrating a hardware example of a learning apparatus according to a second embodiment;
FIG. 3 illustrates an example of a combination of an existing model and a new model;
FIG. 4 is a block diagram illustrating an example of the contents of the existing model and the new model;
FIG. 5 illustrates a learning example of a neural network;
FIG. 6 illustrates an update example of an individual weight based on an individual error gradient and a learning rate;
FIG. 7 illustrates an example of learning rates and learning phases;
FIG. 8 illustrates an example of parallel processing performed by a plurality of GPUs;
FIG. 9 illustrates an example of change of the learning rates based on iterations;
FIG. 10 illustrates an example of controlling update frequencies based on the learning rates;
FIG. 11 illustrates example of an update frequency table;
FIG. 12 is a block diagram illustrating a functional example of the learning apparatus;
FIG. 13 is a flowchart illustrating the first half of an example of a procedure of machine learning; and
FIG. 14 is a flowchart illustrating the second half of the example of the procedure of the machine learning.

### DESCRIPTION OF EMBODIMENTS

Hereinafter, a first embodiment will be described with reference to drawings.

### [First Embodiment]

A first embodiment will be described.

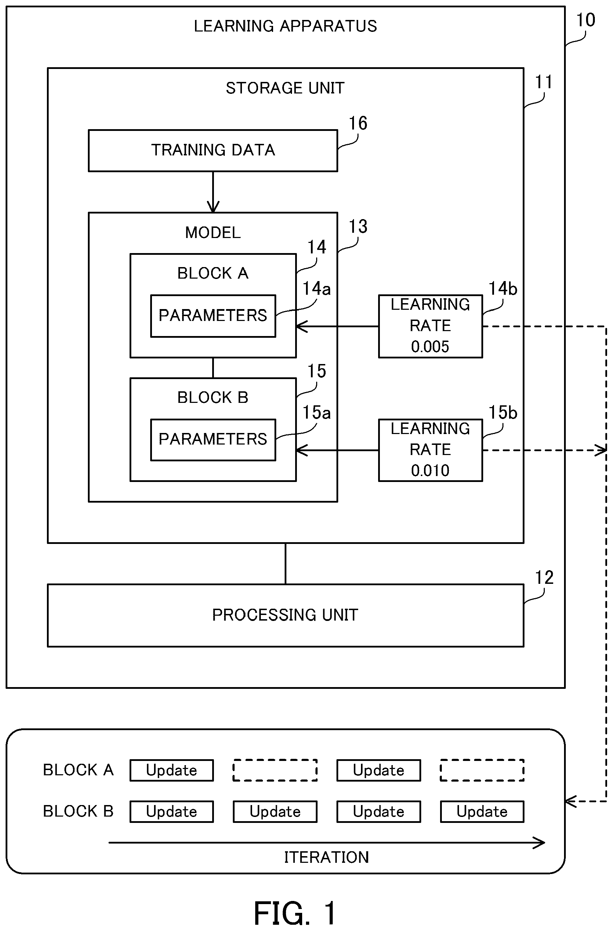

FIG. 1 illustrates an example of a learning apparatus according to a first embodiment.

This learning apparatus 10 according to the first embodiment performs machine learning by using training data 16 and learns a model 13. The learning apparatus 10 may be a client apparatus or a server apparatus. The learning apparatus 10 may also be referred to as a computer, an information processing apparatus, or a machine learning apparatus, for example.

The learning apparatus 10 includes a storage unit 11 and a processing unit 12. The storage unit 11 may be a volatile semiconductor memory such as a random access memory (RAM) or a non-volatile storage such as a hard disk drive (HDD) or a flash memory. For example, the processing unit 12 is a processor such as a central processing unit

(CPU), a graphics processing unit (GPU), or a digital signal processor (DSP). The processing unit 12 may include an electronic circuit for specific use, such as an application specific integrated circuit (ASIC) or a field programmable gate array (FPGA). The processor executes a program stored in a memory such as a RAM (in the storage unit 11, for example). A group of processors may be referred to as "a multiprocessor" or simply "a processor".

The storage unit 11 holds the model 13 and the training data 16.

The model 13 is a model learned by machine learning. For example, the model 13 is a neural network. The model 13 includes blocks 14 and 15. Each of the blocks 14 and 15 is a group of elements in the model 13 and may be referred to as a "model". For example, each of the blocks 14 and 15 is a neural network. The blocks 14 and 15 are located on a path between the input and the output of the model 13, and the data passes through the path. For example, the block 14 is closer to the input of the model 13 than the block 15 is to the input of the model 13. The block 15 is closer to the output of the model 13 than the block 14 is to the output of the model 13. The blocks 14 and 15 may be connected to each other in the model 13.

The block 14 (block A) includes parameters 14a learned by machine learning. The block 15 (block B) includes parameters 15a learned by machine learning. The parameters 14a are constants that define a relationship between the input and the output of the block 14, and the parameters 15a are constants that define a relationship between the input and the output of the block 15. For example, these parameters 14a and 15a are weights of edges (synapses) in their respective neural networks.

A block included in an existing model that has already been learned may be used as the block 14, and a block that is additionally learned by the machine learning to be performed this time (the current machine learning) may be used as the block 15. Namely, the current machine learning may generate the model 13 by extending the existing model. In this case, when the current machine learning is started, parameters that have already been learned are used as the parameters 14a, and the parameters 15a are initialized to predetermined values. However, the learned parameters could be modified through the current machine learning.

The training data 16 is used for the learning of the model 13. The training data 16 includes a plurality of records, and in each record, an explanatory variable corresponding to the input of the model 13 is associated with an objective variable corresponding to the output of the model 13. The objective variables included in the training data 16 are teacher labels that indicate correct answers of the output of the model 13. For example, a handwritten character recognition model that receives images of handwritten characters as the input and that outputs recognized characters may be used as the model 13. In this case, the training data 16 is data in which the images of the handwritten characters are associated with their respective correct characters. The handwritten character recognition model may be generated by connecting an additional block to a downstream portion of the blocks included in a generic image recognition model that has already been learned.

The processing unit 12 sets a learning rate 14b to the block 14 of the model 13 and a learning rate 15b to the block 15 of the model 13. The learning rate 14b is a hyperparameter that adjusts a single update amount (variation before and after parameter update processing) when the parameters 14a are updated, and the learning rate 15b is a hyperparameter that adjusts a single update amount when the parameters 15a are updated. When a larger learning rate 14b is set, the parameters 14a change more in single parameter update processing. When a smaller learning rate 14b is set, the parameters 14a change less in single parameter update processing. In addition, when a larger learning rate 15b is set, the parameters 15a change more in single parameter update processing. When a smaller learning rate 15b is set, the parameters 15a change less in single parameter update processing.

The individual learning rate affects the accuracy of the model 13 and the convergence rate of the machine learning. If an excessively large learning rate is set, the risk that the corresponding parameters deviate from an optimal solution is increased. If an excessively small learning rate is set, the time needed for the corresponding parameters to reach an optimal solution is extended. Herein, the learning rate 14b is set to be smaller than the learning rate 15b. In many cases, it is preferable that a block closer to the output of the model 13 have a larger learning rate and that a block closer to the input of the model 13 have a smaller learning rate. In addition, it is preferable that a larger learning rate be set to a new block added in the current machine learning and that a smaller learning rate be set to an existing block that has already been learned. The learning rates 14b and 15b may be specified by the user. In addition, during the learning processing to be described below, the learning rates 14b and 15b may be dropped in stages.

After the learning rates 14b and 15b are set, the processing unit 12 starts learning processing. In this learning processing, the processing unit 12 iteratively updates the parameters 14a and 15a by using the training data 16. The processing unit 12 enters an individual explanatory variable included in the training data 16 to the model 13 and calculates a prediction error between the output of the model 13 and an individual teacher label included in the training data 16. The prediction error may be a residual sum of squares between the output and the individual teacher label. The processing unit 12 updates the parameters 15a based on the prediction error and the learning rate 15b and updates the parameters 14a based on the prediction error and the learning rate 14b such that the prediction error is reduced.

For example, the processing unit 12 performs backpropagation to propagate error information from the output of the model 13 to the input of the model 13 and calculates an error gradient for each of the parameters 14a and 15a. The error gradient is an estimated value of the variation of the prediction error when the corresponding parameter is changed only by unit amount. For example, the processing unit 12 changes the individual parameter 15a only by an amount obtained by multiplying the corresponding error gradient given to the parameter 15a by the learning rate 15b and changes the individual parameter 14a only by an amount obtained by multiplying the individual error gradient given to the parameter 14a by the learning rate 14b. There are cases in which the parameters 14a change little or does not change at all in single update processing when the learning rate 14b is sufficiently small. When the learning rate 14b is 0, the parameters 14a do not change at all.

In the learning processing, the processing unit 12 controls the update frequencies of the parameters 14a and 15a. Specifically, the processing unit 12 determines a relationship between the learning rate 14b and the learning rate 15b. For example, the processing unit 12 calculates a ratio between the learning rate 14b and the learning rate 15b. Based on the relationship between the learning rate 14b and learning rate 15b, the processing unit 12 controls the update frequency of the parameters 14a such that this update frequency becomes lower than that of the parameters 15a by intermittently omitting the updating of the parameters 14a of the block 14 having a smaller learning rate. The processing unit 12 sets a lower parameter update frequency to a block having a smaller learning rate. For example, the processing unit 12 matches the ratio between the update frequencies of the parameters 14a and 15a with the ratio between the learning rates 14b and 15b.

For example, when the ratio between the learning rates 15b and 14b is 2:1, the processing unit 12 sets the ratio between the update frequencies of the parameters 15a and 14a to 2:1 by updating the parameters 14a every two update operations of the parameters 15a. To omit the updating of the parameters 14a, the Backward phase and the Update phase of the backpropagation may be omitted for the block 14. In the Backward phase, the error information is propagated from the output to the input of the neural network. In the Update phase, the edge weights are updated from the error gradients and the learning rates.

For example, regarding the block 15, the processing unit 12 calculates the error gradients of the individual edges by propagating the error information from the output to the input. In addition, regarding the block 14, the processing unit 12 calculates the error gradients of the individual edges by propagating the error information from the output to the input every two update operations of the block 15. Namely, regarding the block 14, the processing unit 12 omits the propagation of the error information every two update operations of the block 15. The processing unit 12 updates the weights of the individual edges in the block 15 from the corresponding error gradients and the learning rate 15b. In addition, regarding the block 14, the processing unit 12 updates the weights of the individual edges from the corresponding error gradients and the learning rate 14b every two update operations of the block 15. Namely, the processing unit 12 omits the updating of the weights of the edges in the block 14 every two update operations of the block 15. When the processing unit 12 omits the updating of the parameters 14a, the processing unit 12 continues to use the old parameters 14a for the subsequent input data.

In the learning apparatus 10 according to the first embodiment, the learning rate 15b is set to the block 15 of the model 13, and the learning rate 14b smaller than the learning rate 15b is set to the block 14 of the model 13. During the leering processing, based on the difference between the learning rate 14b and the learning rate 15b, the updating of the parameters 14a is intermittently omitted, and the update frequency of the parameters 14a is set to be lower than that of the parameters 15a. For example, the backpropagation and the updating of the edge weights in the neural network of the block 14 are thinned out, and the update frequency of the block 14 is set to be lower than that of the block 15.

As described above, when the parameters 14a are updated with a small learning rate 14b, the parameters 14a change little. Thus, according to the present embodiment, the parameters 14a are updated intermittently. Namely, unnecessary update processing on the parameters 14a is prevented, and the calculation amount of the machine learning is reduced. In addition, by setting a larger learning rate to a block closer to the output of the model 13 and by setting a smaller learning rate to a block closer to the input of the model 13, the update processing is efficiently thinned out. In addition, when an existing model that has already been learned is used in the model 13, by setting a larger learning rate to an additional new block and by setting a smaller learning rate to the existing block, the update frequency of the existing block is reduced. As a result, the machine learning is efficiently performed.

### [Second Embodiment]

Next, a second embodiment will be described.

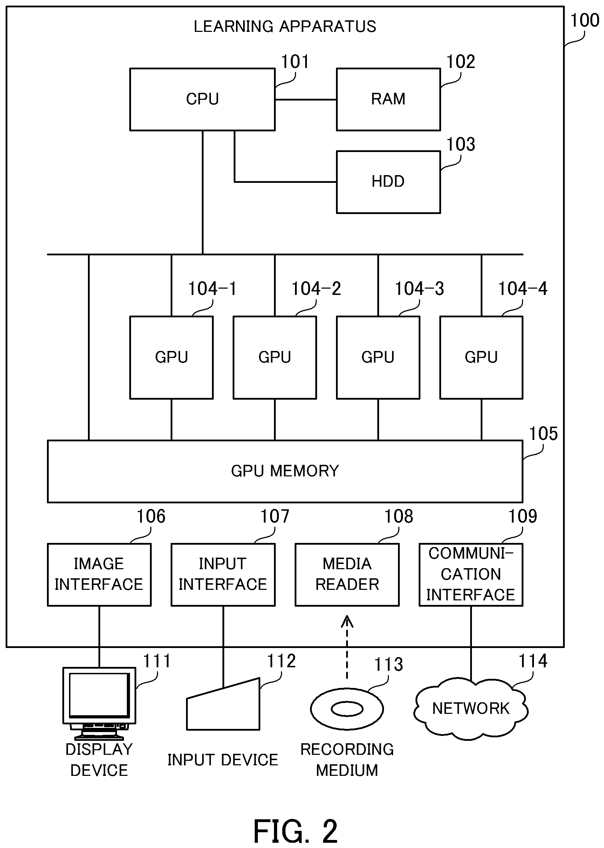

FIG. 2 is a block diagram illustrating a hardware example of a learning apparatus according to a second embodiment.

This learning apparatus 100 according to the second embodiment generates a multi-layer neural network that performs image recognition through deep learning. The learning apparatus 100 may be a client apparatus or a server apparatus. The learning apparatus 100 may also be referred to as a computer, an information processing apparatus, or a machine learning apparatus, for example. The learning apparatus 100 corresponds to the learning apparatus 10 according to the first embodiment.

The learning apparatus 100 includes a CPU 101, a RAM 102, an HDD 103, GPUs 104-1 to 104-4, a GPU memory 105, an image interface 106, an input interface 107, a media reader 108, and a communication interface 109. The CPU 101 or the GPUs 104-1 to 104-4 correspond to the above processing unit 12. The RAM 102, the HDD 103, or the GPU memory 105 corresponds to the above storage unit 11.

The CPU 101 is a processor that executes a program commands and is a main processor that controls the learning apparatus 100. The CPU 101 loads a program or at least a part of data held in the HDD 103 to the RAM 102 and executes the program. The CPU 101 may be configured to cause the GPUs 104-1 to 104-4 to execute the program. The CPU 101 forwards the program or data from the RAM 102 to the GPU memory 105, causes the GPUs 104-1 to 104-4 to execute the forwarded program, and reads the operation result from the GPU memory 105 to the RAM 102. The CPU 101 may cause a GPU of another learning apparatus to execute the program via the communication interface 109.

The RAM 102 is a volatile semiconductor memory that holds a program or data. The learning apparatus 100 may include a different kind of memory other than a RAM. The learning apparatus 100 may include a plurality of memories.

The HDD 103 is a non-volatile storage that holds software programs such as an operating system (OS), middleware, and application software and data. The learning apparatus 100 may include a different kind of storage such as a flash memory or a solid state drive (SSD). The learning apparatus 100 may include a plurality of storages. Examples of the programs executed by the CPU 101 include a platform program and a library program for controlling machine learning. Examples of the programs executed by the GPUs 104-1 to 104-4 include a library program and a user application program for machine learning.

Each of the GPUs 104-1 to 104-4 is a processor that executes program commands and is a hardware accelerator for executing a certain kind of operation at high speed. The GPUs 104-1 to 104-4 execute a program on different data in a parallel manner in accordance with an instruction from the CPU 101. Each of the GPUs 104-1 to 104-4 reads a program and its corresponding data from the GPU memory 105, executes the program, and stores the operation result in the GPU memory 105.

The GPU memory 105 is a volatile semiconductor memory that holds a program or data. The GPU memory 105 is used by the GPUs 104-1 to 104-4.

The image interface 106 outputs an image to a display device 111 connected to the learning apparatus 100 in accordance with a command from the CPU 101. Any kind of display device such as a cathode ray tube (CRT) display, a liquid crystal display (LCD), an organic electroluminescence (OEL) display, or a projector may be used as the display device 111. An output device other than the display device 111 such as a printer may be connected to the learning apparatus 100.

The input interface 107 receives an input signal from an input device 112 connected to the learning apparatus 100. Any kind of input device such as a mouse, a touch panel, a touchpad, or a keyboard may be used as the input device 112. A plurality of kinds of input devices may be connected to the learning apparatus 100.

The media reader 108 is a reading device that reads a program or data recorded in a recording medium 113. Any kind of recording medium such as a magnetic disk such as a flexible disk (FD) or an HDD, an optical disc such as a compact disc (CD) or a digital versatile disc (DVD), or a semiconductor memory may be used as the recording medium 113. The media reader 108 copies, for example, a program or data read from the recording medium 113 to another recording medium such as the RAM 102 or the HDD 103. The read program is executed by a processor such as the CPU 101. The recording medium 113 may be a portable recording medium and may be used to distribute a program or data. In addition, the recording medium 113 or the HDD 103 may be referred to as a computer-readable recording medium.

The communication interface 109 is connected to a network 114 and communicates with an external apparatus via the network 114. The communication interface 109 may be a wired communication interface connected to a wired communication apparatus such as a switch and a router or may be a wireless communication interface connected to a wireless communication apparatus such as a base station or an access point.

By preparing a plurality of learning apparatuses, each of which corresponds to the learning apparatus 100, a multi-node system including the plurality of learning apparatuses as nodes may be configured. In this case, the GPUs included in their respective learning apparatuses may perform a program on different data in a parallel manner. For example, two learning apparatuses, each of which includes four GPUs, may be connected to the network 114, and these eight GPUs may perform a program in a parallel manner. A CPU of any one of the learning apparatuses may control the GPUs of a plurality of learning apparatuses.

Next, a structure of a model learned by the learning apparatus 100 will be described.

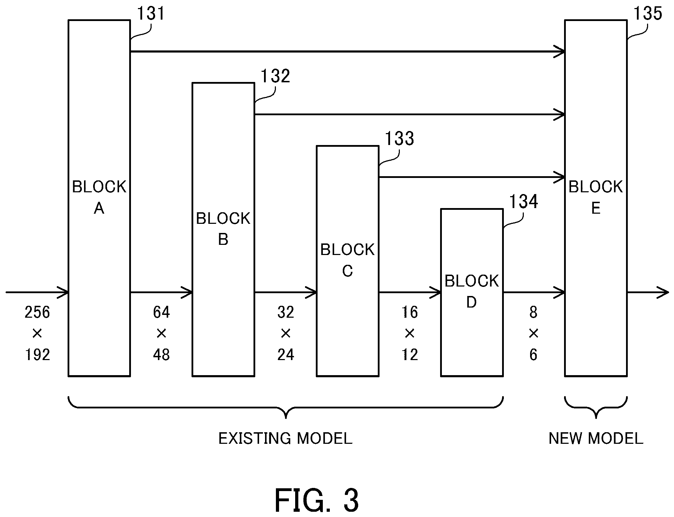

FIG. 3 illustrates an example of a combination of an existing model and a new model.

In the second embodiment, a multi-layer neural network is used as a model, and deep learning is used as a machine learning algorithm. The learning apparatus 100 efficiently learns a model having a desired function by combining an existing model that has already been learned and a new model. For example, the learning apparatus 100 generates a handwritten character recognition model focused on recognition of handwritten characters by connecting a new model to a downstream portion of a generic image recognition model that has already been learned.

The model generated by the learning apparatus 100 includes blocks 131 to 135. Each of the blocks 131 to 135 is a neural network. The blocks 131 to 134 belong to an existing model, and the block 135 belongs to a new model.

The block 131 (block A) is the first block that is closest to the input of the model. The block 131 receives image data of 256 vertical pixels × 192 horizontal pixels and outputs feature information referred to as a feature map of 64 rows × 48 columns. The block 132 (block B) is the next-stage block of the block 131. The block 132 receives the feature map outputted by the block 131 and outputs a feature map of 32 rows × 24 columns. The block 133 (block C) is the next-stage block of the block 132. The block 133 receives the feature map outputted by the block 132 and outputs a feature map of 16 rows × 12 columns. The block 134 (block D) is the next-stage block of the block 133. The block 134 receives the feature map outputted by the block 133 and outputs a feature map of 8 rows × 6 columns.

The block 131 compresses the vertical size of the inputted image data by 1/4 and also compresses the horizontal size of the inputted image data by 1/4. Each of the blocks 132 to 134 compresses the vertical size of the inputted image data by 1/2 and also compress the horizontal size of the inputted image data by 1/2. Namely, these blocks extract a feature amount in stages from their respective inputted image data. The block 135 (block E) is the last block that is closest to the output of the model. The block 135 receives and synthesizes the feature maps outputted by the blocks 131 to 134. Based on the feature map outputted by the block 135, a prediction result corresponding to an objective variable is generated. For example, from the feature map outputted by the block 135, a probability is calculated for each of a plurality of character candidates, and a character candidate having the highest probability is outputted as the character recognition result.

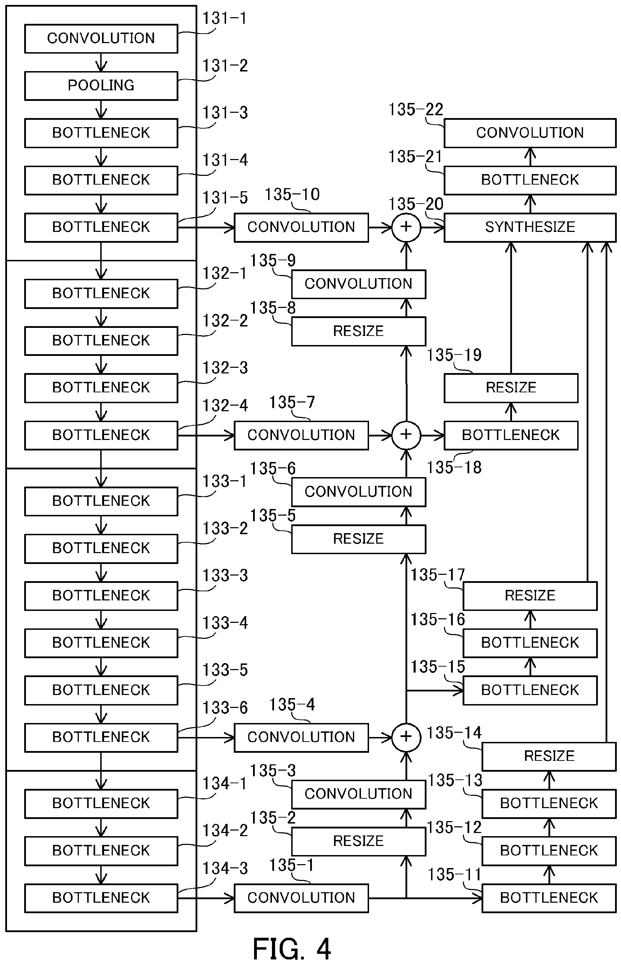

FIG. 4 is a block diagram illustrating an example of the contents of the existing model and the new model.

The block 131 includes small blocks 131-1 to 131-5. The small block 131-1 performs convolution in which a multiply-accumulate operation is repeated while filters are being shifted. The small block 131-1 compresses the horizontal size of the inputted image data by 1/2 and compresses the vertical size of the inputted image data by 1/2. The small block 131-2 is located at the next stage of the small block 131-1 and performs pooling in which a predetermined number of neighboring elements are synthesized into a single element. The small block 131-2 compresses the horizontal size of the inputted image data by 1/2 and compresses the vertical size of the inputted image data by 1/2.

The small block 131-3 is located at the next stage of the small block 131-2 and is a so-called bottleneck block. The bottleneck block performs convolution three consecutive times on the input data, adds the original input data to the convolution result, and outputs the sum. The small block 131-4 is a bottleneck block located at the next stage of the small block 131-3. The small block 131-5 is a bottleneck block located at the next stage of the small block 131-4.

The block 132 includes small blocks 132-1 to 132-4. The small block 132-1 is the first bottleneck block in the block 132. The small block 132-1 compresses the horizontal size of the inputted image data by 1/2 and also compresses the vertical size of the inputted image data by 1/2. The small block 132-2 is a bottleneck block located at the next stage of the small block 132-1. The small block 132-3 is a bottleneck block located at the next stage of the small block 132-2. The small block 132-4 is a bottleneck block located at the next stage of the small block 132-3.

The block 133 includes small blocks 133-1 to 133-6. The small block 133-1 is the first bottleneck block in the block 133. The small block 133-1 compresses the horizontal size of the inputted image data by 1/2 and also compresses the vertical size of the inputted image data by 1/2. The small block 133-2 is a bottleneck block located at the next stage of the small block 133-1. The small block 133-3 is a bottleneck block located at the next stage of the small block 133-2. The small block 133-4 is a bottleneck block at the next stage of the small block 133-3. The small block 133-5 is a bottleneck block located at the next stage of the small block 133-4. The small block 133-6 is a bottleneck block located at the next stage of the small block 133-5.

The block 134 includes small blocks 134-1 to 134-3. The small block 134-1 is the first bottleneck block in the block 134. The small block 134-1 compresses the horizontal size of the inputted image data by 1/2 and also compresses the vertical size of the inputted image data by 1/2. The small block 134-2 is a bottleneck block located at the next stage of the small block 134-1. The small block 134-3 is a bottleneck block located at the next stage of the small block 134-2.

The block 135 includes small blocks 135-1 to 135-22.

The small block 135-1 receives the output of the small block 134-3 located at the last stage in the block 134 and performs convolution. The small block 135-2 receives the output of the small block 135-1 and performs a resize operation to double the vertical size and the horizontal size. This resize operation expands the data size to 16 rows × 12 columns. Bilinear interpolation is used for this resize operation. The small block 135-3 receives the output of the small block 135-2 and performs convolution.

The small block 135-4 receives the output of the small block 133-6 located at the last stage in the block 133 and performs convolution. The output of the small block 135-3 and the output of the small block 135-4 are added up (a sum #1). The small block 135-5 receives the sum #1 and performs a resize operation to double the vertical size and the horizontal size. This resize operation expands the data size to 32 rows × 24 columns. The small block 135-6 receives the output of the small block 135-5 and performs convolution.

The small block 135-7 receives the output of the small block 132-4 located at the last stage in the block 132 and perform convolution. The output of the small block 135-6 and the output of the small block 135-7 are added up (a sum #2). The small block 135-8 receives the sum #2 and performs a resize operation to double the vertical size and the horizontal size. This resize operation expands the data size to 64 rows × 48 columns. The small block 135-9 receives the output of the small block 135-8 and performs convolution.

The small block 135-10 receives the output of the small block 131-5 located at the last stage in the block 131 and performs convolution. The output of the small block 135-9 and the output of the small block 135-10 are added up (a sum #3).

The small block 135-11 is a bottleneck block that receives the output of the small block 135-1. The small block 135-12 is a bottleneck block located at the next stage of the small block 135-11. The small block 135-13 is a bottleneck block located at the next stage of the small block 135-12. The small block 135-14 receives the output of the small block 135-13 and performs a resize operation to expand the vertical size and the horizontal size eightfold. This resize operation expands the data size to 64 rows × 48 columns.

The small block 135-15 is a bottleneck block that receives the sum #1. The small block 135-16 is a bottleneck block located at the next stage of the small block 135-15. The small block 135-17 receives the output of the small block 135-16 and performs a resize operation to expand the vertical size and the horizontal size fourfold. This resize operation expands the data size to 64 rows × 48 columns.

The small block 135-18 is a bottleneck block that receives the sum #2. The small block 135-19 receives the output of the small block 135-18 and performs a resize operation to double the vertical size and the horizontal size. This resize operation expands the data size to 64 rows × 48 columns.

The small block 135-20 synthesizes the sum #3 and the outputs of the small blocks 135-14, 135-17, and 135-19. The data size of each of the sum #3 and the outputs of the small blocks 135-14, 135-17, and 135-19 is 64 rows × 48 columns. In this example, the small block 135-20 synthesizes the sum #3 and the outputs as the data from the plurality of channels, without changing the data size of 64 rows × 48 columns. The small block 135-21 is a bottleneck block located at the next stage of the small block 135-20. The small block 135-22 receives the output of the small block 135-21 and performs convolution. The data size of the output of the small block 135-22 is 64 rows × 48 columns.

By synthesizing the output of the small block 135-1, the sums #1 to #3, and the output of the small block 135-22, a prediction result is generated. For example, from the output of the small block 135-1, the sums #1 to #3, and the output of the small block 135-22, a probability is calculated for each of a plurality of character candidates, and a character candidate having the highest probability is outputted as the character recognition result.

Next, a model learning method will be described.

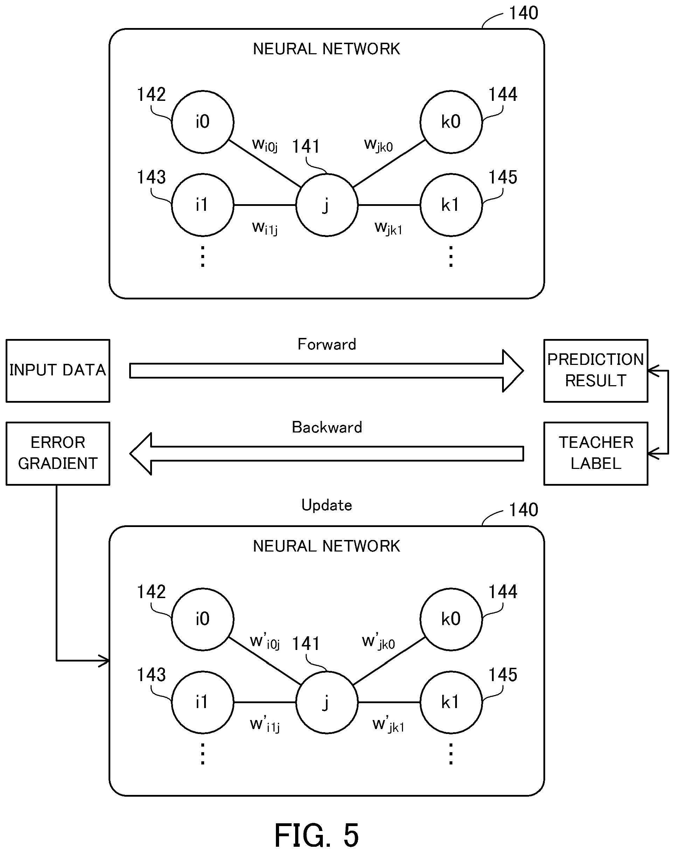

FIG. 5 illustrates a learning example of a neural network.

A multi-layer neural network learned by the learning apparatus 100 includes an input layer, at least one intermediate layer, and an output layer. Each layer includes a plurality of nodes corresponding to neurons. An edge corresponding to a synapse is formed between nodes belonging to two neighboring layers. Each edge has a weight as a parameter that is determined through machine learning. In addition, each node has an activation function for converting a weighted sum of input values into an output value. For example, a sigmoid function, a ramp function, or a SoftMax function may be used as the activation function. The activation function is specified as a hyperparameter by the user. The activation function may be set per layer, per small block, or per block.

Hereinafter, a neural network 140 will be described as an example. The neural network 140 includes nodes 141 to 145. The node 141 (node j) belongs to an intermediate layer. The node 142 (node i0) and the node 143 (node i1) belong to the previous layer of the layer of the node 141. The node 144 (node k0) and the node 145 (node k1) belong to the subsequent layer of the layer of the node 141. The edge between the node 142 and the node 141 is given a weight wᵢ₀ⱼ. The edge between the node 143 and the node 141 is given a weight wᵢ₁ⱼ. The edge between the node 141 and the node 144 is given a weight wⱼₖ₀. The edge between the node 141 and the node 145 is given a weight wⱼₖ₁.

Generally, the weights in the neural network 140 are learned by repeating a plurality of phases including Forward, Backward and Update phases.

In the Forward phase, explanatory variables included in the training data are entered to the input layer in the neural network 140 as input data, and prediction results with respect to the input data are outputted from the output layer in the neural network 140. Next, prediction errors between the prediction results and the teacher labels included in the training data are calculated. For example, a prediction vector listing the probabilities of a plurality of character candidates is compared with a correct answer vector. The correct answer vector indicates "1" as a numerical value corresponding to the correct character and "0" as a numerical value corresponding to the characters other than the correct character. A square root of the sum of the squares of the difference between the two vectors is calculated. This a prediction error expressed as the L2 norm.

The second embodiment assumes mini-batch learning as the training data use method. In mini-batch learning, input data used in a single operation includes about a few dozen records (samples). Each record includes an explanatory variable and a teacher label as an objective variable. An explanatory variable is entered to the input layer per record, and a prediction result is outputted from the output layer per record. A prediction error with respect to single input data represents the average of prediction errors calculated based on a plurality of records. The machine learning according to the second embodiment may be applied to online learning that uses a single record in a single operation.

For example, the node 141 multiplies the output value of the node 142 by the weight wᵢ₀ⱼ, multiplies the output value of the node 143 by the weight wᵢ₁ⱼ, and adds up these products, to calculate a weighted sum of the output values of the previous layer. By entering this weighted sum to an activation function, the output value of the node 141 is calculated. The output value of the node 141 is supplied to the nodes 144 and 145. In this way, numerical values are propagated from the input layer to the output layer via at least one intermediate layer.

In the Backward phase, error information based on a prediction error is propagated from the output layer to the input layer of the neural network 140. As a result, an error gradient is calculated for each of the plurality of weights included in the neural network 140. When a prediction error is assumed to be a function of a weight, the error gradient corresponds to a value obtained by performing partial differentiation on the prediction error by the weight. These error gradients are used to update the weights such that the prediction errors are minimized.

In the Backward phase, the error gradients are propagated in the opposite direction, i.e., from the output layer to the input layer, through backpropagation. For example, the error gradients with respect to the weights wᵢ₀ⱼ and wᵢ₁ⱼ between the node 141 and the previous layer are calculated, for example, from the weights wⱼₖ₀ and wⱼₖ₁ between the node 141 and the subsequent layer, the error gradients with respect to these weights wⱼₖ₀ and wⱼₖ₁, the output value of the node 141 in the Forward phase, and the output values of the nodes 142 and 143 in the previous layer. In this way, the error gradients are sequentially determined, starting with the weights closest to the output layer.

In the Update phase, the error gradients calculated in the Backward phase are reflected on the weights, to update the weights of the neural network 140. For example, the weights wᵢ₀ⱼ, wᵢ₁ⱼ, wⱼₖ₀, and wⱼₖ₁ are updated to weights w'ᵢ₀ⱼ, w'ᵢ₁ⱼ, w'ⱼₖ₀, and w'ⱼₖ₁.

When the error gradients are reflected on the weights, instead of subtracting the error gradients from the current weights, the error gradients are converted into subtraction values to reduce the impact of the current input data, and the obtained subtraction values are subtracted from the current weights. In this operation, a learning rate, which is a hyperparameter, is used. An individual learning rate may be set per block. If the learning rate is high, the impact of the most-recent input data is strongly reflected on the weights. In contrast, if the learning rate is low, the impact of the most-recent input data is weakly reflected on the weights. The learning rates are important since the learning rates affect the final accuracy of the neural network 140 and the weight convergence rate.

For example, assuming that w denotes a weight that has not been updated, w' denotes a weight that has been updated, ∇E denotes an error gradient, and η denotes a learning rate, a numerical value obtained by multiplying the error gradient by the learning rate may be used as a subtraction value. In this case, w' - w - η × ∇E is calculated. There is additivity regarding the reflection of the error gradients on the weights. Sequentially reflecting the error gradients calculated from certain input data and the error gradients calculated from other input data on the weights is equivalent to adding up these two sets of error gradients and reflecting the total error gradients on the weights. By using this additivity, learning of a neural network may be performed in a parallel manner.

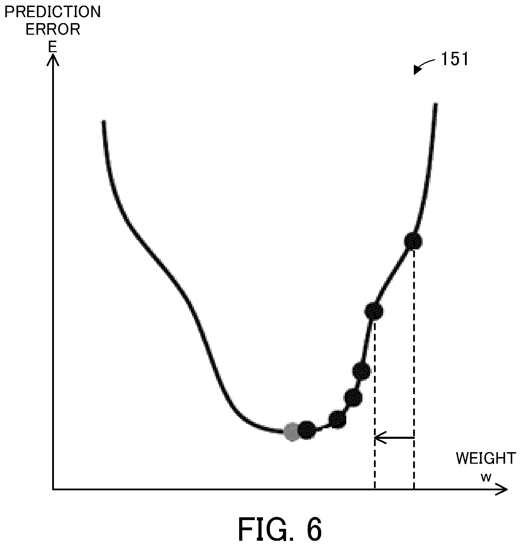

FIG. 6 illustrates an update example of an individual weight based on an individual error gradient and a learning rate.

A prediction error E of a neural network is deemed as a function of a weight w, as illustrated in a graph 151. In backpropagation, a weight w that minimizes the prediction error E is searched. Based on an error gradient of the prediction error E corresponding to a current weight w, the weight w changes in the opposite direction of the error gradient. When the error gradient is positive, the weight w is decreased, and when the error gradient is negative, the weight w is increased. A single variation of the weight w is adjusted based on the corresponding learning rate, which is a real number 0 or more.

If a single variation is excessively large, there is a risk that the weight w will not reach an optimal solution. If a single variation is excessively small, the time needed for the weight w to reach an optimal solution is extended. It is preferable that a single variation become smaller as the weight w moves closer to an optimal solution. Thus, as will be described below, as the machine learning progresses, the individual learning rate is dropped in stages. The progress of the machine learning is evaluated based on the weight update iteration number and the learning time, for example.

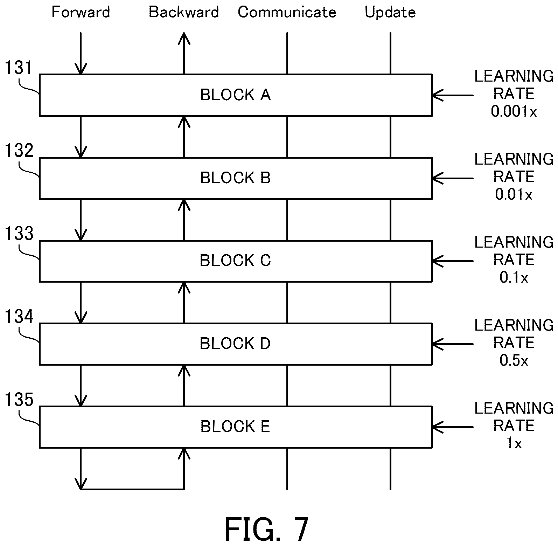

FIG. 7 illustrates an example of learning rates and learning phases.

As described above, for example, by parallelizing the Forward phase and the Backward phase on different input data, a multi-layer neural network is learned more quickly. Thus, the learning apparatus 100 performs parallel processing by using the GPUs 104-1 to 104-4. The parallel processing for learning of a multi-layer neural network includes four phases of Forward, Backward, Communicate, and Update.

When machine learning is started, the GPUs 104-1 to 104-4 hold the same model.

In the Forward phase, each of the GPUs 104-1 to 104-4 selects different input data and enters its own selected input data to the block 131. Accordingly, the data is propagated from the block 131 to the block 135 via the blocks 132 to 134, and a prediction result is outputted by the model. Each of the GPUs 104-1 to 104-4 calculates a prediction error. Since the GPUs 104-1 to 104-4 have used the input data different from each other, the prediction errors calculated by the GPUs 104-1 to 104-4 could be different from each other.

In the Backward phase, each of the GPUs 104-1 to 104-4 propagates its own error information from the block 135 to the block 131 based on its own prediction error and calculates error gradients for the weights included in the blocks. The error gradients are sequentially calculated, starting with the block closest to the output of the model. Since the GPUs 104-1 to 104-4 have used the input data different from each other, the GPUs 104-1 to 104-4 could calculate a different error gradient on the same weight.

In the Communicate phase, the GPUs 104-1 to 104-4 communicate with each other to add up the four error gradients calculated on the same weight. To add up the error gradients, an AllReduce communication defined by MPI (Message Passing Interface) is used. The Communicate phase may be implemented by using an MPI library. However, a different kind of collective communication such as a broadcast communication or an AllGather communication defined by MPI may be used. In this way, the GPUs 104-1 to 104-4 share the same sum of error gradients.

In the Update phase, each of the GPUs 104-1 to 104-4 divides the sum of error gradients by the number of nodes to calculate the average of the error gradients. Herein, each GPU divides the sum of error gradients by 4, which is the number of GPUs. Next, each of the GPUs 104-1 to 104-4 updates the weights based on the average of the error gradients and a predefined learning rate. The GPUs 104-1 to 104-4 calculate the same average of the error gradients and the same weights in the Update phase.

An initial learning rate is specified for each of the blocks 131 to 135 by the user. A larger learning rate is set to a block closer to the output of the model. A smaller learning rate is set to a block closer to the input of the model. Thus, the learning rate of the block 135 is the largest, and the learning rate of the block 131 is the smallest. The learning rate of the block 134 is between the learning rates of the blocks 133 and 135. The learning rate of the block 133 is between the learning rates of the blocks 132 and 134. The learning rate of the block 132 is between the learning rates of the blocks 131 and 133. In other words, smaller learning rates are set to the blocks of the existing model, and a larger learning rate is set to the block of the new model.

If the above condition is not satisfied, the learning apparatus 100 may notify the user of a warning and request for change of the learning rates. The learning rates of the blocks 131 to 135 are dropped in stages from their respective initial values as the machine learning progresses. The learning rates may be dropped such that the ratio among the learning rates of the blocks 131 to 135 is maintained. Alternatively, the learning rates may be dropped, irrespective of the ratio. However, it is preferable to prevent the size relationship among the learning rates of the blocks 131 to 135 from being reversed by the change of the learning rates. For example, when the iteration number reaches a predetermined number, the learning apparatus 100 drops the current learning rates of the blocks 131 to 135 by half. When a dropped learning rate reaches a predetermined lower limit, this learning rate may be deemed as 0.

For example, assuming that the learning rate of the block 135 is 1x, the learning rate of the block 134 is set to 0.5x, which is 1/2 of that of the block 135, and the learning rate of the block 133 is set to 0.1x, which is 1/10 of that of the block 135. In addition, the learning rate of the block 132 is set to 0.01x, which is 1/100 of that of the block 135, and the learning rate of the block 131 is set to 0.001x, which is 1/1000 of that of the block 135.

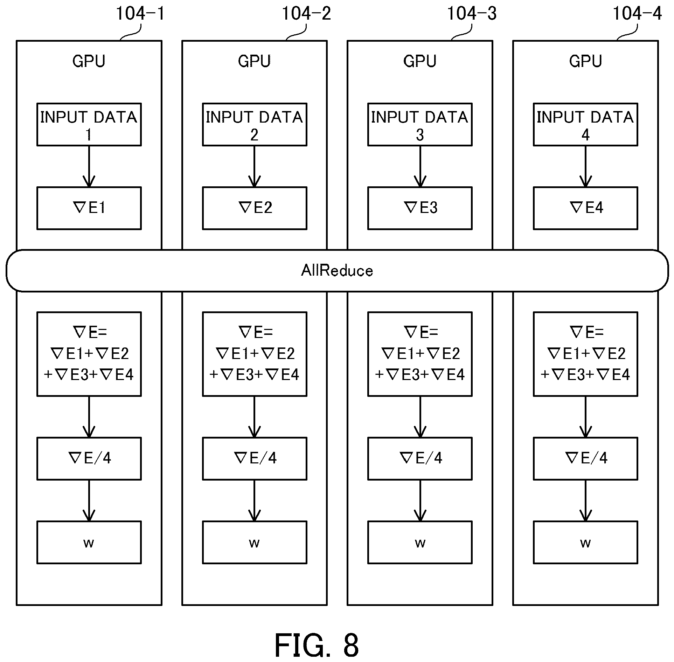

FIG. 8 illustrates an example of parallel processing performed by a plurality of GPUs.

Hereinafter, an example of parallel processing of the Communicate phase and the Update phase performed by the GPUs 104-1 to 104-4 will be described. On a certain weight w, the GPU 104-1 calculates an error gradient ∇E1 from input data 1, and the GPU 104-2 calculates an error gradient VE2 from input data 2. Likewise, on the certain weight w, the GPU 104-3 calculates an error gradient VE3 from input data 3, and the GPU 104-4 calculates an error gradient VE4 from input data 4.

The GPUs 104-1 to 104-4 perform an AllReduce communication to add up the error gradients ∇E1 to ∇E4 and share an error gradient VE. The communication procedure among the GPUs 104-1 to 104-4 depends on the implementation of an MPI library.

For example, the GPUs 104-1 and 104-2 exchange their error gradients with each other and share an error gradient ∇E1 + ∇E2. The GPUs 104-3 and 104-4 also exchange their error gradients with each other and share an error gradient ∇E3 + ∇E4. Next, the GPUs 104-1 and 104-3 exchange the calculation value at this point with each other and share an error gradient ∇E1 + ∇E2 + ∇E3 + ∇E4. In addition, the GPUs 104-2 and 104-4 exchange the calculation value at this point with each other and share an error gradient ∇E1 + ∇E2 + ∇E3 + ∇E4.

Each of the GPUs 104-1 to 104-4 divides the total error gradient ∇E by 4, which is the number of nodes, to calculate an average error gradient ∇E/4. Each of the GPUs 104-1 to 104-4 reflects the error gradient ∇E/4 on the weight w based on its corresponding learning rate.

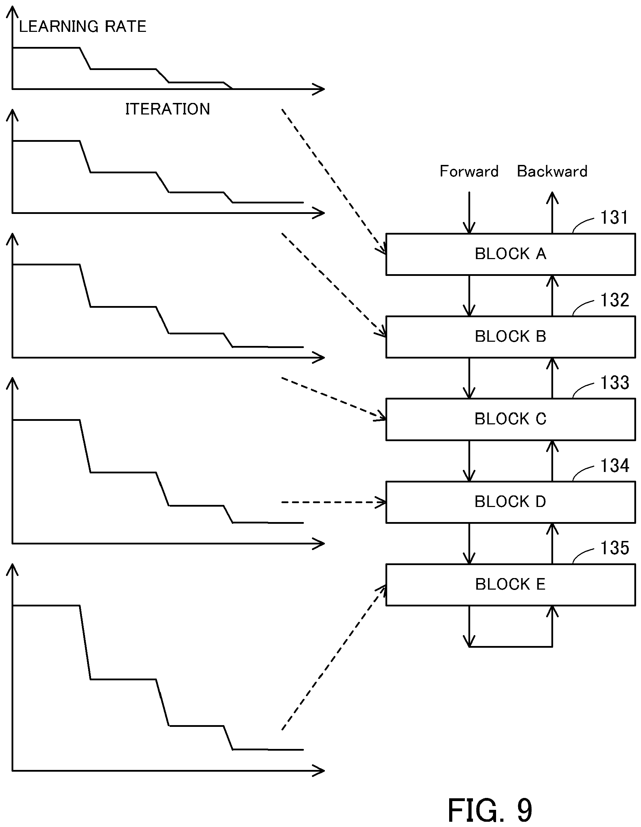

FIG. 9 illustrates an example of change of the learning rates based on iterations.

As described above, different learning rates are set to the blocks 131 to 135, and these learning rates are dropped in stages as the machine learning progresses. The platform of the machine learning automatically drops the learning rates from their respective initial values specified by the user.

The learning apparatus 100 sets a large initial value to the block 135 and sets an initial value, which is smaller than that of the block 135, to the block 134. The learning apparatus 100 sets an initial value, which is smaller than that of the block 134, to the block 133. In addition, the learning apparatus 100 sets an initial value, which is smaller than that of the block 133, to the block 132 and sets an initial value, which is smaller than that of the block 132, to the block 131.

For example, when the iteration number reaches a predetermined number corresponding to a first stage, the learning apparatus 100 drops the learning rates of the blocks 131 to 135 by 1/2. It is preferable that the learning rates of the blocks 131 to 135 be dropped at once. Next, when the iteration number reaches a predetermined number corresponding to a second stage, the learning apparatus 100 drops the current learning rates of the blocks 131 to 135 by 1/2. Namely, the learning rates are dropped to 1/4 of their initial values. Next, when the iteration number reaches a predetermined number corresponding to a third stage, the learning apparatus 100 drops the current learning rates of the blocks 131 to 135 by 1/2. Namely, the learning rates are dropped to 1/8 of their initial values.

When a small initial learning rate is dropped, depending on the number of significant figures, the dropped learning rate could be treated as 0. The user may specify 0 as the initial learning rate of a block that is close to the input of the model. Thus, there are cases in which the learning rate of a certain block indicates 0. For example, the learning rate of the block 131 reaches 0 after dropped three times. The weights of a block whose learning rate is 0 will not be updated thereafter. The learning rates are updated so that the learning rate of a block closest to the input of the model will reach 0 first. In addition, the learning rates are updated such that the size relationship among the updated learning rates of the blocks 131 to 135 matches the initial size relationship.

Next, reduction of the calculation amount of the deep learning will be described.

As described above, the weights of a block whose learning rate is 0 are not changed even when the Update phase is performed. In the case of a block whose learning rate is sufficiently small but not 0, a numerical value obtained by multiplying the individual error gradient by the learning rate could be smaller than the number of significant figures, and the weights could not be changed even when the Update phase is performed. In addition, even when a numerical value obtained by multiplying the individual error gradient by the learning rate is in the range of the number of significant figures, the numerical value could be very small, and the weights could change very little.

Even if the phases for updating the weights, such as the Backward, Communicate, and Update phases, are performed on the above blocks whose weights change very little or does not change at all in all the iterations, these phases could result in unnecessary calculations that do not contribute to improvement of the model accuracy. Thus, the learning apparatus 100 drops the weight update frequency of a block whose learning rate is small and omits the Backward, Communicate, and Update phases in some iterations. In this way, the calculation amount of the deep learning is reduced. The update frequencies of the weights of the blocks 131 to 135 are set to be in proportion with the learning rates of the blocks 131 to 135.

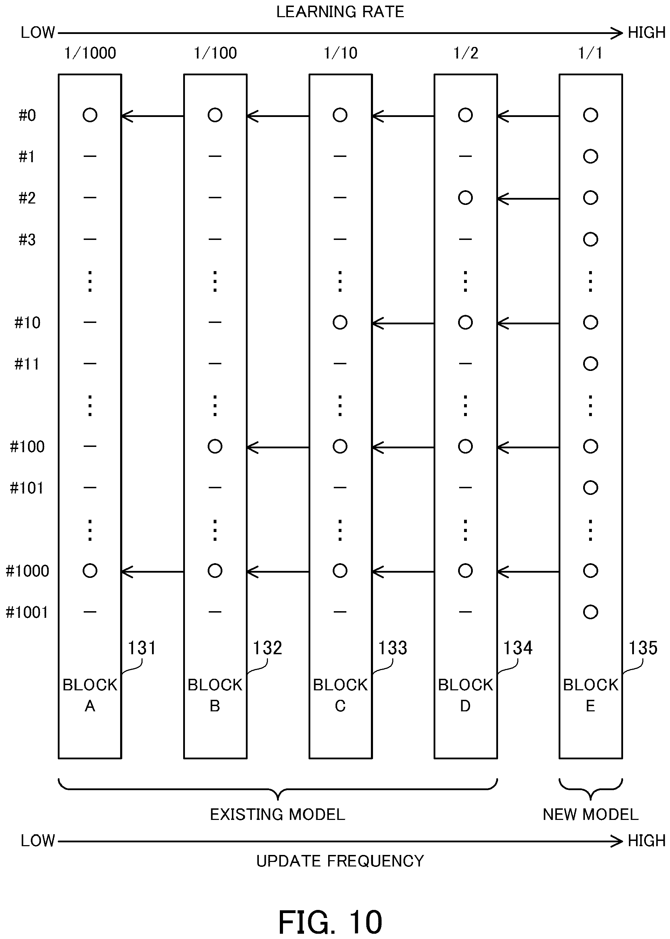

FIG. 10 illustrates an example of controlling the update frequencies based on the learning rates.

The learning apparatus 100 calculates the ratio among the learning rates of the blocks 131 to 135 based on the largest learning rate. Herein, assuming that the learning rate of the block 135 is 1, the learning rate of the block 134 is 1/2 of the learning rate of the block 135, and the learning rate of the block 133 is 1/10 of the learning rate of the block 135. In addition, the learning rate of the block 132 is 1/100 of the learning rate of the block 135, and the learning rate of the block 131 is 1/1000 of the learning rate of the block 135. The learning apparatus 100 defines the ratio among the learning rates of the blocks 131 to 135 based on the update frequencies of the blocks 131 to 135. Thus, in relation to the updating of the weights of the block 135, the update frequency of the block 134 is 1/2 of the update frequency of the block 135, and the update frequency of the block 133 is 1/10 of the update frequency of the block 135. In addition, the update frequency of the block 132 is 1/100 of the update frequency of the block 135, and the update frequency of the block 131 is 1/1000 of the update frequency of the block 135.

The blocks 131 to 135 perform the Forward phase in all the iterations. Thus, data is propagated from the block 131 to the block 135 in all the iterations, and a prediction error of the model is calculated. In addition, the block 135 also performs the other three Backward, Communicate, and Update phases in all the iterations. Thus, the weights of the block 135 are updated in all the iterations.

In contrast, the blocks 131 to 134 do not perform the three Backward, Communicate, and Update phases in some iterations. Thus, the weights of the blocks 131 to 134 are not updated in some iterations. When a certain block does not perform the update processing through these three phases, since the error information is not propagated, an upstream block or blocks closer to the input do not perform the update processing, either. Thus, there are four patterns in which the update processing is not performed. In the first pattern, the blocks 131 to 134 do not perform the update processing. In the second pattern, the blocks 131 to 133 do not perform the update processing. In third pattern, the blocks 131 and 132 do not perform the update processing. In the fourth pattern, only the block 131 does not perform the update processing.

For example, regarding each of the blocks 131 to 134, the learning apparatus 100 divides the current iteration number by the denominator of the corresponding update frequency and determines whether the remainder is 0. If the remainder is 0, the learning apparatus 100 performs the update processing on the corresponding block in the current iteration. In FIG. 10, the block 135 updates the weights in all the iterations. The block 134 updates the weights in iterations #0, #2, #4, and so on. The block 133 updates the weights in iterations #0, #10, #20, and so on. The block 132 updates the weights in iterations #0, #100, #200, and so on. The block 131 updates the weights in iterations #0, #1000, #2000, and so on.

For example, in iteration #0, the Backward phase is performed on the blocks 135 to 131. In iteration #1, the Backward phase is performed only on the block 135, and the error information is not propagated through the blocks 131 to 134. On the blocks 131 to 134 through which the error information is not propagated, the subsequent Communicate phase and Update phase are not performed, either. In iteration #2, since the Backward phase is performed only on the blocks 135 and 134, the error information is not propagated through the blocks 131 to 133. In iteration #3, the Backward phase is performed only on the block 135, the error information is not propagated through the blocks 131 to 134.

In iteration #10, since the Backward phase is performed only on the blocks 135 to 133, the error information is not propagated through the blocks 131 and 132. In iteration #11, since the Backward phase is performed only on the block 135, the error information is not propagated through the blocks 131 to 134. In iteration #100, since the Backward phase is performed only on the blocks 135 to 132, the error information is not propagated through the block 131. In iteration #101, since the Backward phase is performed only on the block 135, the error information is not propagated through the blocks 131 to 134.

In iteration #1000, the Backward phase is performed on all the blocks 135 to 131. In iteration #1001, the Backward phase is performed only on the block 135, the error information is not propagated through the blocks 131 to 134. In this way, the weights of the block 131 are updated one in every 1,000 iterations, and the weights of the block 132 are updated 10 in every 1,000 iterations. The weights of the block 133 are updated 100 in every 1,000 iterations, and the weights of the block 134 are updated 500 in every 1,000 iterations.

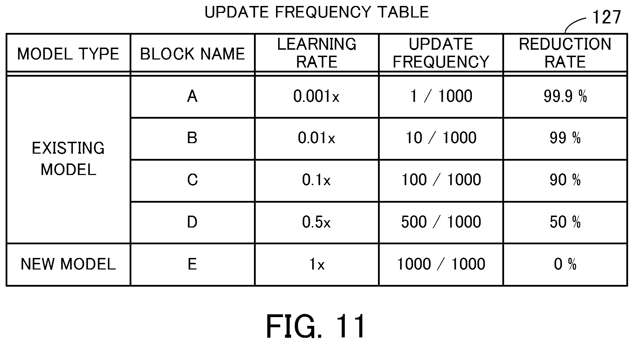

FIG. 11 illustrates an example of an update frequency table.

This update frequency table 127 indicates the update frequencies of the blocks 131 to 135. The learning apparatus 100 may generate the update frequency table 127 to manage the update frequencies. The update frequency table 127 includes columns "model type", "block name", "learning rate", "update frequency", and "reduction rate".

An individual box under "model type" indicates an existing model having weights that have already been learned in the past as initial weight values or a new model having weights that have not been learned yet. The blocks 131 to 134 belong to an existing model, and the block 135 belongs to a new model. An individual box under "block name" indicates an identification name that identifies one of the blocks 131 to 135. An individual box under "learning rate" indicates the latest learning rate of one of the blocks 131 to 135. The latest learning rate could be lower than the corresponding initial value specified by the user. The update frequency table 127 may include the ratio among the learning rates of the blocks 131 to 135.

An individual box under "update frequency" indicates the ratio of the number of iterations in which the weights of the corresponding one of the blocks 131 to 135 are updated with respect to a predetermined number of consecutive iterations. An individual box under "reduction rate" is the calculation amount decrease rate achieved by omitting the update of the corresponding weights. The update frequency of the block 131 is 1/1000, and the reduction rate is 99.9%. The update frequency of the block 132 is 10/1000, and the reduction rate is 99%. The update frequency of the block 133 is 100/1000, and the reduction rate is 90%. The update frequency of the block 134 is 500/1000, and the reduction rate is 50%. The update frequency of the block 135 is 1000/10000, and the reduction rate is 0%.

Next, functions and a processing procedure of the learning apparatus 100 will be described.

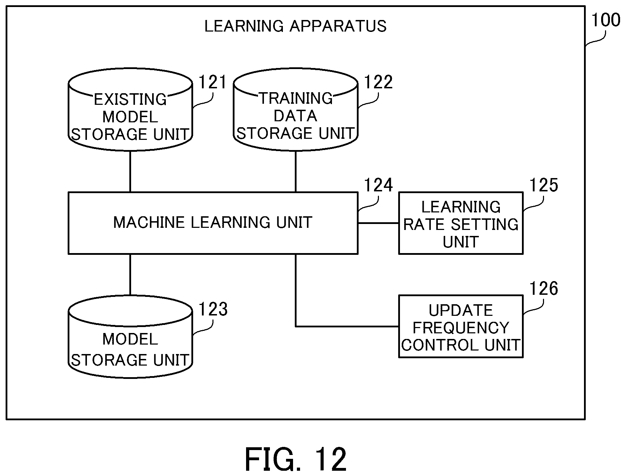

FIG. 12 is a block diagram illustrating a functional example of the learning apparatus.

The learning apparatus 100 includes an existing model storage unit 121, a training data storage unit 122, a model storage unit 123, a machine learning unit 124, a learning rate setting unit 125, and an update frequency control unit 126.

The existing model storage unit 121, the training data storage unit 122, and the model storage unit 123 are each realized by using a storage area of the RAM 102 or the HDD 103, for example. The machine learning unit 124, the learning rate setting unit 125, and the update frequency control unit 126 are each realized by a program executed by the CPU 101, for example. The machine learning unit 124, the learning rate setting unit 125, and the update frequency control unit 126 may each be implemented as a platform program that controls machine learning parallel processing using a plurality of nodes. The platform program is stored in the RAM 102 and executed by the CPU 101. Specific processing in the individual phase may be implemented as a user program or a library program. The user program or the library program is executed by the GPUs 104-1 to 104-4.

The existing model storage unit 121 holds the existing model including the blocks 131 to 134. For example, the existing model is a known multi-layer neural network including learned weights such as VGG-16 or ResNet50. The training data storage unit 122 holds training data used for the current deep learning. The training data includes a plurality of records, and an explanatory variable and a teacher label are associated with each other in each record. For example, an explanatory variable indicates image data of a handwritten character, and a teacher label indicates a correct character. The model storage unit 123 holds a model that is learned by the current deep learning. The model that is learned includes the blocks 131 to 134 that belong to the existing model and the block 135 that belongs to the new model. The weights of the blocks 131 to 134 could be modified from those stored in the existing model storage unit 121.

The machine learning unit 124 controls the deep learning. The machine learning unit 124 generates a prototype model by connecting the block 135 of the new model whose weights have been initialized to a downstream portion of the group of blocks 131 to 134 included in the existing model. The machine learning unit 124 forwards the prototype model and the training data to the GPU memory 105 and causes the GPUs 104-1 to 104-4 to perform deep learning. Upon completion of the deep learning, the machine learning unit 124 reads the learned model from the GPU memory 105 and stores the model in the model storage unit 123. The machine learning unit 124 may display information about the learned model on the display device 111 or may transmit the information to another information processing apparatus.

When performing the deep learning, the machine learning unit 124 acquires the learning rates set to the blocks 131 to 135 from the learning rate setting unit 125 and forwards control data indicating the learning rates to the GPU memory 105. In addition, the machine learning unit 124 acquires the update frequencies determined for the blocks 131 to 135 from the learning rate setting unit 125 and determines whether the blocks 131 to 135 need to be updated in the next iteration. The machine learning unit 124 forwards control data indicating whether to update the blocks 131 to 135 to the GPU memory 105. For example, whether to update these blocks 131 to 135 is expressed by setting a control flag indicating a value ON(1) when the update processing is performed and by setting a control flag indicating a value OFF(0) when the update processing is not performed.

The learning rate setting unit 125 receives the initial learning rates of the blocks 131 to 135 from the user. The learning rate setting unit 125 provides the initial learning rates to the machine learning unit 124. In addition, the learning rate setting unit 125 detects learning rate change timing during the deep learning. The learning rate change timing is, for example, when the iteration number reaches a predetermined number. When the learning rate setting unit 125 detects the learning rate change timing, the learning rate setting unit 125 drops the current learning rates of the blocks 131 to 135 in accordance with a predetermined calculation expression. For example, the learning rate setting unit 125 drops the current learning rates of the blocks 131 to 135 by half. The learning rate setting unit 125 provides the changed learning rates to the machine learning unit 124.

The update frequency control unit 126 detects that the initial learning rates have been set or that the learning rates have been changed during the deep learning by the learning rate setting unit 125. Accordingly, the update frequency control unit 126 calculates the ratio among the learning rates of the blocks 131 to 135 and deems the ratio among the learning rates as the ratio among the update frequencies of the blocks 131 to 135. The update frequency control unit 126 provides the update frequencies of the blocks 131 to 135 to the machine learning unit 124.

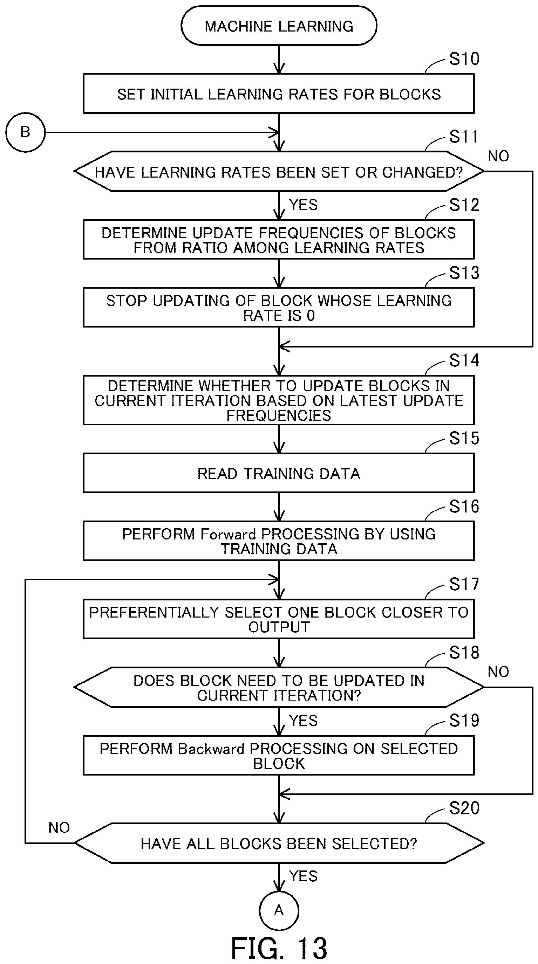

FIG. 13 is a flowchart illustrating the first half of an example of a procedure of machine learning.

(S10) The learning rate setting unit 125 sets initial learning rates for the blocks 131 to 135 included in a model. The initial learning rates are specified by the user.

(S11) The update frequency control unit 126 determines whether the learning rates of the blocks 131 to 135 have been set or changed. If the learning rates have been set or changed, the processing proceeds to step S12. If not, the processing proceeds to step S14.

(S12) The update frequency control unit 126 calculates the ratio among the current learning rates of the blocks 131 to 135 and determines the update frequencies of the weights of the blocks 131 to 135 from the ratio among the learning rates.

(S13) The update frequency control unit 126 searches the blocks 131 to 135 for a block whose current learning rate is 0. If there is a block whose current learning rate is 0, the update frequency control unit 126 sets the update frequency of this block to 0 and stops the updating of the weights of the block.

(S14) The machine learning unit 124 determines whether to update the blocks 131 to 135 in the current iteration, based on the latest update frequencies of the blocks 131 to 135. For example, in the case of a block whose update frequency is 1/10, the update processing is performed only once in every 10 iterations. In this case, for example, the machine learning unit 124 determines to perform the update processing only when the remainder obtained by dividing the iteration number by 10 is 0. The machine learning unit 124 generates control flags indicating whether to update the blocks 131 to 135, for example. A control flag = ON(1) indicates that the corresponding block needs to be updated, and a control flag = OFF(0) indicates that the corresponding block will not be updated.

(S15) The GPUs 104-1 to 104-4 read training data to be used in the current iteration from the GPU memory 105. The training data has been forwarded in advance from the RAM 102 to the GPU memory 105. It is preferable that the GPUs 104-1 to 104-4 select mutually different records when reading the training data. The GPUs 104-1 to 104-4 determine the locations of their respective records to be used, for example, in accordance with a predetermined algorithm.

(S16) The GPUs 104-1 to 104-4 perform the processing in the Forward phase in a parallel manner by using their respective read training data. In the Forward phase, the GPUs 104-1 to 104-4 enter explanatory variables included in their respective training data to the model, propagate the data from the block 131 to the block 135, and generate their respective prediction results. Each of the GPUs 104-1 to 104-4 calculates a prediction error between a teacher label included in the training data and the prediction result.

(S17) Each of the GPUs 104-1 to 104-4 preferentially selects one block that is closer to the output of the model. Thus, the blocks 135 to 131 are selected in this order. When the processing proceeds from the Forward phase to the Backward phase, the GPUs 104-1 to 104-4 may perform synchronization such as barrier synchronization.

(S18) Each of the GPUs 104-1 to 104-4 determines whether the selected block needs to be updated in the current iteration. For example, each of the GPUs 104-1 to 104-4 determines whether the control flag corresponding to the selected block indicates ON. If the block needs to be updated, the processing proceeds to step S19. If not, the processing proceeds to step S20.

(S19) The GPUs 104-1 to 104-4 perform the processing in the Backward phase on their respective selected blocks in a parallel manner. In the Backward phase, each of the GPUs 104-1 to 104-4 propagates the error information from the output to the input of the corresponding selected block and calculates an error gradient for each of the weights included in the corresponding selected block. If there is another block in the previous stage of the selected block, the error information is propagated from this another block. In this case, the error information is propagated from the output to the input.

(S20) Each of the GPUs 104-1 to 104-4 determines whether all the blocks included in the model have been selected in step S17. If all the blocks have been selected, the processing proceeds to step S21. If there is still a block that has not been selected yet, the processing returns to step S17.

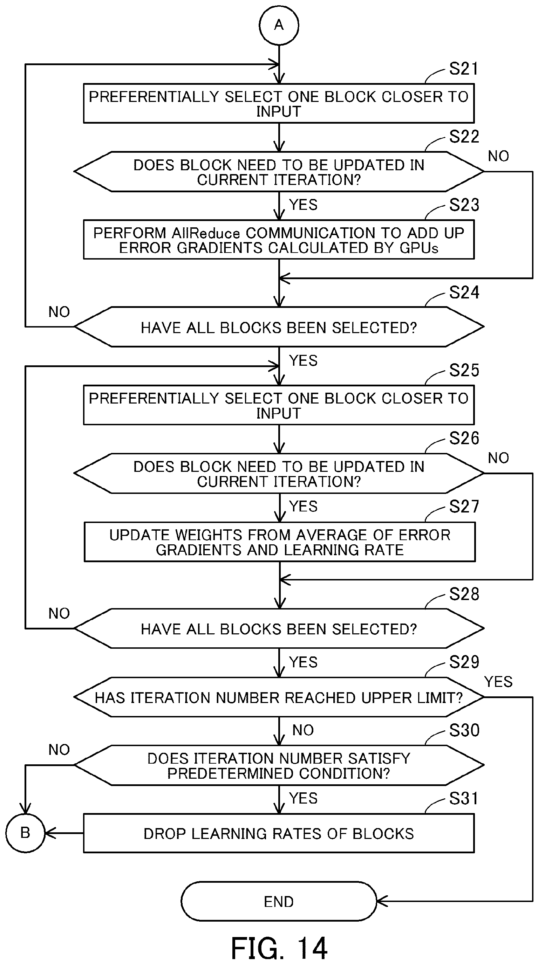

FIG. 14 is a flowchart illustrating the second half of the example of the procedure of the machine learning.

(S21) Each of the GPUs 104-1 to 104-4 preferentially selects one block that is closer to the input to the model. Thus, the blocks 131 to 135 are selected in this order. When the processing proceeds from the Backward phase to the Communicate phase, the GPUs 104-1 to 104-4 may perform synchronization such as barrier synchronization.

(S22) Each of the GPUs 104-1 to 104-4 determines whether the selected block needs to be updated in the current iteration. For example, each of the GPUs 104-1 to 104-4 determines whether the control flag corresponding to the selected block indicates ON. If the block needs to be updated, the processing proceeds to step S23. If not, the processing proceeds to step S24.

(S23) The GPUs 104-1 to 104-4 perform an AllReduce communication to add up the error gradients calculated for the weights included in their respective selected block. If the selected block does not need to be updated, the GPUs 104-1 to 104-4 does not perform the AllReduce communication, and the sum of error gradients is treated as 0.

(S24) Each of the GPUs 104-1 to 104-4 determines whether all the blocks included in the model have been selected in step S21. If all the blocks have been selected, the processing proceeds to step S25. If there is still a block that has not been selected yet, the processing returns to step S21. According to the second embodiment, upon completion of the Backward phase, the Communicate phase is started. However, if the error gradients of a block have been calculated, the AllReduce communication may be started on the corresponding block in the direction from the output to the input of the model. Namely, the Backward phase and the Communicate phase may be performed in a parallel manner.

(S25) Each of the GPUs 104-1 to 104-4 preferentially selects one block that is closer to the input of the model. Thus, the blocks 131 to 135 are selected in this order. When the processing proceeds from the Communicate phase to the Update phase, the GPUs 104-1 to 104-4 may perform synchronization such as barrier synchronization.

(S26) Each of the GPUs 104-1 to 104-4 determines whether the selected block needs to be updated in the current iteration. For example, each of the GPUs 104-1 to 104-4 determines whether the control flag corresponding to the selected block indicates ON. If the block needs to be updated, the processing proceeds to step S27. If not, the processing proceeds to step S28.

(S27) Each of the GPUs 104-1 to 104-4 divides the sum of error gradients by the number of nodes and calculates an average of the error gradients. Each of the GPUs 104-1 to 104-4 updates the weights included in the selected block from the current learning rate of the selected block and the average of the error gradients. For example, a numerical value obtained by multiplying the average of the error gradients by the learning rate is subtracted from an individual weight. If the selected block does not need to be updated, the weights included in the selected block are not changed.

(S28) Each of the GPUs 104-1 to 104-4 determines whether all the blocks included in the model have been selected in step S25. If all the blocks have been selected, the processing proceeds to step S29. If there is still a block that has not been selected yet, the processing returns to step S25.

(S29) The machine learning unit 124 determines whether the iteration number has reached an upper limit. For example, the upper limit of the iteration number is specified by the user. If the iteration number has reached an upper limit, the machine learning is ended. If not, the processing proceeds to step S30.

(S30) The learning rate setting unit 125 determines whether the iteration number satisfies a predetermined condition. For example, the learning rate setting unit 125 determines whether the iteration number has reached a predetermined number that indicates learning rate change timing. The learning rate change timing may be set two or more times during the deep learning. If the predetermined condition is satisfied, the processing proceeds to step S31. If not, the processing returns to step S11. If the iteration number does not satisfy the predetermined condition, the current learning rates and update frequencies of the blocks 131 to 135 are maintained.

(S31) The learning rate setting unit 125 drops the learning rates of the blocks 131 to 135 in accordance with a predetermined calculation method. For example, the learning rate setting unit 125 changes the current learning rates of the blocks 131 to 135 by 1/2. After changing the learning rates, the learning rates of some of the blocks 131 to 135 could reach 0. For example, if a learning rate becomes a decimal smaller than the number of significant figures, this learning rate is treated as 0. In addition, if a changed learning rate reaches a predetermined lower limit, this learning rate may be treated as 0. Next, the processing returns to step S11.

In the case of the learning apparatus 100 according to the second embodiment, deep learning of a multi-layer neural network is parallelized by using a plurality of GPUs of a single node or different nodes. In this way, deep learning is performed more quickly. In addition, a model learned by deep learning is a model obtained by adding a new model to a downstream portion of an existing model. Thus, compared with a case in which a model is newly learned, a more accurate model is learned within a shorter period of time. In addition, since the size of training data is reduced, the training data collection cost is reduced.

In addition, a learning rate, which is one hyperparameter, is set for each of the blocks included in a model. A larger learning rate is set to an additional block closer to the output, and a smaller learning rate is set to an existing block closer to the input. Thus, it is possible to efficiently learn the entire model while using the weights of the existing model.

In addition, the update frequencies of the weights included in a plurality of blocks are determined based on the ratio among the learning rates of these blocks. If a block has a smaller learning rate, the update frequency of the weights of this block is low. Thus, since the Backward, Communicate, and Update phases are intermittently omitted for some blocks, execution of unnecessary update processing is prevented. As a result, the calculation amount is reduced. In many cases, even when the update processing is performed, in particular, on a block whose learning rate is 0 or almost 0, the weights of this block change very little or do not change at all. Thus, thinning out the update processing on such a block causes little impact on the prediction result obtained next time. Namely, it is possible to reduce the calculation amount without affecting the model accuracy. In addition, by using the ratio among the learning rates as the ratio among the update frequencies, it is possible to balance the model accuracy and the calculation amount. As described above, deep learning is performed at high speed.

In one aspect, the calculation amount of machine learning is reduced.

## Claims

1. A computer program that causes a computer (10) to execute a process comprising:
setting a first learning rate (15b) to a first block (15) including a first parameter (15a) and a second learning rate (14b), which is smaller than the first learning rate (15b), to a second block (14) including a second parameter (14a), the first block (15) and the second block (14) being included in a model (13);
starting learning processing in which updating the first parameter (15a) based on a prediction error of the model (13) and the first learning rate (15b) and updating the second parameter (14a) based on the prediction error and the second learning rate (14b) are performed iteratively, the prediction error having been calculated by using training data (16); and
controlling an update frequency of the second parameter (14a) such that the update frequency of the second parameter (14a) becomes lower than an update frequency of the first parameter (15a) by intermittently omitting the updating of the second parameter (14a) in the learning processing based on a relationship between the first learning rate (15b) and the second learning rate (14b) .

2. The program according to claim 1, wherein the controlling includes determining the update frequency of the second parameter (14a) in the learning processing based on a ratio between the first learning rate (15b) and the second learning rate (14b).

3. The program according to claim 1, wherein the controlling includes detecting that at least one of the first learning rate (15b) and the second learning rate (14b) has been changed during the learning processing and changing the update frequency of the second parameter (14a) based on a relationship between the first learning rate (15b) and the second learning rate (14b), at least one of which has been changed.

4. The program according to claim 1, wherein the controlling includes determining whether the second learning rate (14b) indicates is equal to or less than a threshold and stopping the updating of the second parameter (14a) when the second learning rate (14b) is equal to or less than the threshold.

5. The program according to claim 1,
wherein the first block is a new block (135), and the first parameter is initialized when the learning processing is started,
wherein the second block is an existing block (131), and the second parameter that has been learned by using other training data is continuously used when the learning processing is started, and
wherein the second block (131) is closer to an input of the model than the first block (135).

6. The program according to claim 1,
wherein the learning processing includes a first phase of calculating the prediction error from the training data, a second phase of performing backpropagation of information about the prediction error from an output of the model to the input of the model, a third phase of causing a plurality of arithmetic units used for parallel processing to synthesize results of the backpropagation, and a fourth phase of updating the first parameter and the second parameter based on the synthesized results of the backpropagation, and
wherein the controlling includes intermittently omitting the second phase, the third phase, and the fourth phase on the second block (131).

7. A learning method comprising:
setting, by a computer (10), a first learning rate (15b) to a first block (15) including a first parameter (15a) and a second learning rate (14b), which is smaller than the first learning rate (15b), to a second block (14) including a second parameter (14a), the first block (15) and the second block (14) being included in a model (13);
starting, by the computer (10), learning processing in which updating the first parameter (15a) based on a prediction error of the model (13) and the first learning rate (15b) and updating the second parameter (14a) based on the prediction error and the second learning rate (14b) are performed iteratively, the prediction error having been calculated by using training data (16); and
controlling, by the computer (10), an update frequency of the second parameter (14a) such that the update frequency of the second parameter (14a) becomes lower than an update frequency of the first parameter (15a) by intermittently omitting the updating of the second parameter (14a) in the learning processing based on a relationship between the first learning rate (15b) and the second learning rate (14b).

8. A learning apparatus comprising:
storage means for storing training data (16) and a model (13) including a first block (15) including a first parameter (15a) and a second block (14) including a second parameter (14a); and
processing means for
setting a first learning rate (15b) to the first block (15) and a second learning rate (14b), which is smaller than the first learning rate (15b), to the second block (14),
starting learning processing in which updating the first parameter (15a) based on a prediction error of the model (13) and the first learning rate (15b) and updating the second parameter (14a) based on the prediction error and the second learning rate (14b) are performed iteratively, the prediction error having been calculated by using training data (16), and
controlling an update frequency of the second parameter (14a) such that the update frequency of the second parameter (14a) becomes lower than an update frequency of the first parameter (15a) by intermittently omitting the updating of the second parameter (14a) based on a relationship between the first learning rate (15b) and the second learning rate (14b).
